# EUROPÄISCHE PATENTSCHRIFT

(11) **EP 4 549 240 B1**
(45) Veröffentlichungstag und Bekanntmachung des Hinweises auf die Patenterteilung: **03.09.2025**
(21) Anmeldenummer: 24158805.2
(22) Anmeldetag: 21.02.2024
(51) Int. Cl.: B60N 2/42, B60N 2/427, B60R 21/207

(54) **FAHRZEUGSITZ MIT EINEM UNFALLABHÄNGIG AUSLÖSBAREN SITZKISSENAIRBAG**
VEHICLE SEAT WITH A SEAT CUSHION AIRBAG THAT CAN BE RELEASED IN A CRASH-DEPENDENT MANNER
SIÈGE DE VÉHICULE AVEC COUSSIN GONFLABLE DE SIÈGE DÉTACHABLE EN FONCTION DE L'ACCIDENT

(30) Priorität: 31.10.2023 DE 102023130117
(43) Veröffentlichungstag der Anmeldung: 07.05.2025
(73) Patentinhaber: Bayerische Motoren Werke Aktiengesellschaft, 80809 München (DE)
(72) Erfinder: Huf, Andreas, 86356 Neusäß (DE); Choulet, Aurelie, 80636 München (DE); Giorgini, Paolo, 80796 München (DE); Hoiss, Franz, 82347 Bernried (DE); Kaufmann, Sven, 14057 Berlin (DE)

(56) Entgegenhaltungen:
- EP-A2- 2 022 685
- WO-A1-2006/003749
- US-A1- 2023 062 639

## Beschreibung

Die Erfindung betrifft eine Fahrzeugsitzvorrichtung bzw. einen Fahrzeugsitz, beispielsweise in Form eines Einzelsitzes oder in Form einer Sitzbank, der einen Sitzkissenairbag aufweist, welcher bei einem Unfall auslösbar ist, um das Sitzkissen zumindest bereichsweise zu verhärten, wodurch ein sog. Submarining hindert werden soll. Darüber hinaus betrifft die Erfindung ein Kraftfahrzeug mit solch einem Fahrzeugsitz.

Bei einem Unfall bzw. Crash mit einem Kraftfahrzeug ist eine Lage eines Gurtbandes am Körper von Insassen entscheidend für die Wirksamkeit von Insassenschutzsystemen und eine potentiell daraus folgende Verletzungsschwere. Ein wichtiges Kriterium dabei ist, dass ein Beckengurt während des Unfalls stabil am Becken des Insassen anliegt, so dass der Insasse nicht dazu neigt, mit dem Becken unter dem Anschnallgurt hindurch zu rutschen. Das Phänomen des Hindurchrutschens des Insassen unter dem Beckengurt wird auch als "Submarining" bezeichnet.

Eine Wahrscheinlichkeit von Submarining bei einem Unfall wird durch viele Einflussfaktoren beeinflusst. Neben einer geometrischer Lage der Gurtanbindungspunkte, einem Straffverhalten des Anschnallgurtes, einem Torsowinkel des Insassen, usw., ist auch eine Steifigkeit eines Sitzkissens des Fahrzeugsitzes sowie dessen Sitzrampenwinkel sehr relevant. Eine höhere Steifigkeit bzw. Härte des Sitzkissens und ein steilerer Sitzkissenanstellwinkel können die Submarining-Neigung deutlich verringern.

Da dies jedoch einem angestrebten Sitzkomfort zuwiderläuft, sind aus dem Stand der Technik Sitzkissenairbags (auch als "Cushion-Airbags" bezeichnet) bekannt, die im Falle eines Unfalls pyrotechnisch aufgeblasen werden. Dadurch kann bei einem Unfall eine verbesserte Fixierung des Beckens im Sitz erreicht und Submarining verhindert werden.

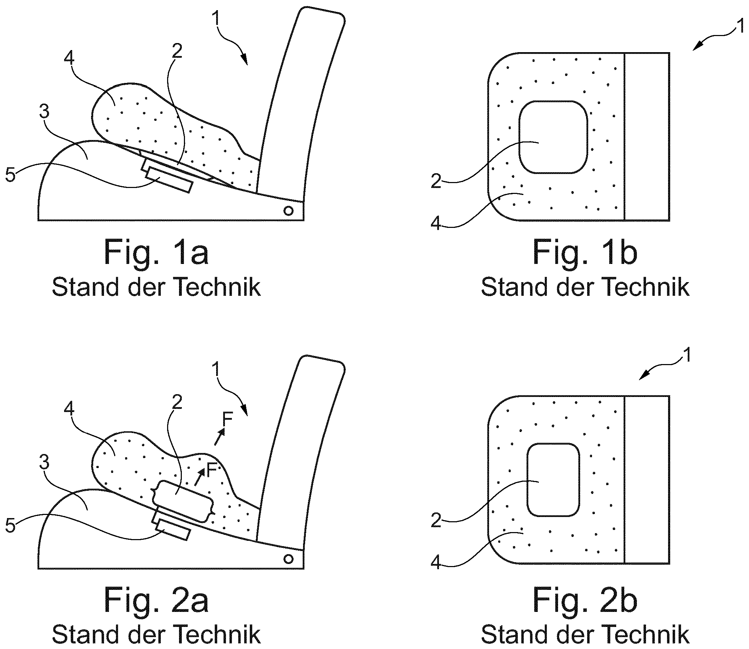

Figur 1a zeigt eine Seitenansicht eines Fahrzeugsitzes 1 mit einem nicht entfalteten Sitzkissenairbag 2 vom Stand der Technik. Figur 1b zeigt eine Draufsicht des Fahrzeugsitzes 1 aus Fig. 1a. Der Sitzkissenairbag 2 ist flach auf einer Sitzschale 3 unterhalb eines Sitzschaums 4 angebracht und von einem Gasgenerator 5 aufblasbar. Wird der Sitzkissenairbag 2 gezündet, entfaltet der Sitzkissenairbag 2 nach oben, wie dies in Figur 2a und 2b dargestellt ist. Figur 2a zeigt eine Seitenansicht des Fahrzeugsitzes 1, in einem entfalteten Zustand des Sitzkissenairbags 2. Figur 2b zeigt eine Draufsicht des Fahrzeugsitzes 1 aus Fig. 2a. Die Entfaltung des Sitzkissenairbags 2 nach oben verdrängt den weichen Sitzschaum 4 in diesem Bereich und verhindert bei einem Unfall ein Eintauchen des Beckens in den weichen Sitzschaum, wodurch Submarining unterbunden werden kann. Da der Sitzkissenairbag 2 nach oben entfaltet, werden Kräfte F erzeugt, die nach oben wirken. Dies ist sehr positiv für den Insassenschutz erwachsener Insassen. Jedoch könnte gerade für leichtere Insassen, Kinder und Babys in Babyschalen durch diese nach oben wirkende Kraft F ein zusätzliches Risiko entstehen. Insbesondere bei Babyschalen könnten die Kräfte F zu einer ungewünschten nach oben gerichteten Kraftkomponente führen.

Aus der WO 2006/003749 A1 ist ein Fahrzeugsitz mit einem Sitzkissen, und einem in das Sitzkissen integrierten Sitzkissenairbag, der bei einem Unfall auslösbar ist, wobei der Sitzkissenairbag in einem gefalteten Zustand so gefaltet ist, dass Abschnitte einer Oberseite des Sitzkissenairbags schräg seitlich nach unten eingefaltet sind und Abschnitte einer Unterseite des Sitzkissenairbags schräg seitlich nach oben eingefaltet sind, so dass der Sitzkissenairbag schräg seitlich nach oben entfaltet.

Es ist daher eine Aufgabe der vorliegenden Erfindung die vorstehend genannten Nachteile zumindest teilweise zu beseitigen. Diese Aufgabe wird durch einen Fahrzeugsitz gemäß Anspruch 1 sowie ein Kraftfahrzeug gemäß Anspruch 14 gelöst. Vorteilhafte Weiterbildungen der Erfindung sind Gegenstand der abhängigen Ansprüche.

Gemäß einem Ausführungsbeispiel der Erfindung wird ein Fahrzeugsitz bzw. ein Kraftfahrzeugsitz bereitgestellt, beispielsweise in Form eines Einzelsitzes oder in Form einer Sitzbank, mit einem Sitzkissen, und einem in das Sitzkissen integrierten Sitzkissenairbag, der bei einem Unfall, insbesondere vor dem Unfall, während eines Aufpralls oder nach einem Unfall, auslösbar ist, um das Sitzkissen zumindest bereichsweise zu verhärten, wobei der Sitzkissenairbag in einem gefalteten Zustand so gefaltet ist, dass Abschnitte einer Oberseite des Sitzkissenairbags nach unten, bezogen auf eine Sitzkissenhochachse, eingefaltet sind und Abschnitte einer Unterseite des Sitzkissenairbags nach oben, bezogen auf eine Sitzkissenhochachse, eingefaltet sind. Insbesondere verlaufen die Falten entlang einem oberen und unteren Ende des Sitzkissenairbags. Dadurch erreicht man den Effekt, dass sich der Sitzkissenairbag überwiegend in Richtungen senkrecht zur Sitzkissenhochachse entfaltet (d.h. in Horizontalrichtung mehr als in Vertikalrichtung, bezogen auf eine Sitzkissenhochachse). Dadurch entfaltet sich der Sitzkissenairbag im Wesentlichen nur seitlich bzw. horizontal, d.h. in Richtungen senkrecht zur Sitzkissenhochachse. Auf diese Weise wird das Polstermaterial des Sitzkissens im Wesentlich nur seitlich bzw. horizontal verdrängt, d.h. in Richtungen senkrecht zur Sitzkissenhochachse, was dazu führt, dass das Sitzkissen in diesem Bereich härter wird. Genauer wird das Sitzkissen in dem Bereich härter, in dem das Polstermaterial komprimiert wird, und in dem Bereich, in dem der Sitzkissenairbag aufgeblasen wird.

Andererseits entstehen kaum oder nur sehr geringe Kräfte nach oben entlang einer Sitzkissenhochachse, wodurch eine Sicherheit von Kindern, insbesondere von Kindern in Babyschalen, erhöht wird. Deswegen ist auch keine Vorrichtung zum Erfassen von Babys oder Kleinkindern und eine damit verbundene Airbagdeaktivierung erforderlich.

Insbesondere ist der Sitzkissenairbag in einem gefalteten Zustand so gefaltet, dass die eingefalteten Abschnitte bzw. Faltungen, insbesondere alle Faltungen, zwischen nicht eingefalteten, parallel zu einer Sitzkissenhochachse verlaufenden Seitenwandungen des Sitzkissenairbags angeordnet sind. Anders ausgedrückt ist der Sitzkissenairbag in einem gefalteten Zustand so gefaltet, dass die Faltungen, insbesondere alle Faltungen, zwischen zwei äußeren, vertikal verlaufenden, ungefalteten Seitenwänden angeordnet sind, wobei die Vertikalebene die Sitzkissenhochachse beinhaltet.

Gemäß einem weiteren Ausführungsbeispiel der Erfindung weist der Sitzkissenairbag einen in einer Sitzkissenquerrichtung verlaufenden länglichen Querabschnitt auf, der in einem gefalteten Zustand so gefaltet ist, dass die Falten entlang der Sitzkissenquerrichtung verlaufen. Insbesondere verlaufen die Falten ausschließlich an der Ober- und Unterseite des Querabschnitts. Dadurch erreicht man den Effekt, dass sich der Querabschnitt im Wesentlichen hin zu einem Sitzkissenvorderende und hin zu einem Sitzkissenhinterende entfaltet. Auf diese Weise wird das Polstermaterial des Sitzkissens hin zum Sitzkissenvorder- und -hinterende verdrängt, was dazu führt, dass das Sitzkissen in diesem Bereich härter wird. Genauer wird das Sitzkissen in dem Bereich härter, in dem das Polstermaterial komprimiert wird, und in dem Bereich, in dem der Querabschnitt aufgeblasen wird.

Gemäß einem weiteren Ausführungsbeispiel der Erfindung ist der Sitzkissenairbag U-förmig, dergestalt, dass sich vom Querabschnitt ausgehend zwei Längsabschnitte zu einem Sitzkissenvorderende oder einem Sitzkissenhinterende hin erstrecken. Dies verbessert die seitliche Stabilisierung des Beckens des Insassen.

Gemäß einem weiteren Ausführungsbeispiel der Erfindung sind die Längsabschnitte in einem gefalteten Zustand so gefaltet, dass die Falten entlang einer Sitzkissenlängsrichtung verlaufen. Insbesondere verlaufen die Falten ausschließlich an der Ober- und Unterseite der Längsabschnitte. Dadurch entfaltet sich der Sitzkissenairbag seitlich bzw. horizontal und im Wesentlichen nicht nach oben, so dass eine Kraftkomponente noch oben, hin zum Insassen vermieden wird.

Gemäß einem weiteren Ausführungsbeispiel der Erfindung ist der Bereich innerhalb der U-Form, d.h. der Bereich zwischen dem Querabschnitt und den beiden Längsabschnitten, frei von unfallabhängig auslösbaren Sitzkissenairbags. Dadurch wird eine Kraftkomponente noch oben, hin zum Insassen vermieden.

Gemäß einem weiteren Ausführungsbeispiel der Erfindung sind innerhalb des Sitzkissenairbags Verbindungselemente vorgesehen, die eine Entfaltung des Sitzkissenairbags entlang einer Sitzkissenhochachse begrenzen. Dies unterstützt den Effekt, dass eine Kraftkomponente noch oben, hin zum Insassen, vermieden wird.

Gemäß einem weiteren Ausführungsbeispiel der Erfindung sind die Verbindungselemente Fangbänder, Fangschnüre und/oder Fangwandungen. Anders ausgedrückt sind die Verbindungselemente ein Element oder mehrere Elemente aus der Gruppe aufweisend: Fangbänder, Fangschnüre und Fangwandungen.

Gemäß einem weiteren Ausführungsbeispiel der Erfindung wird der Fahrzeugsitz in Form einer mehrere Fahrzeugsitze aufweisenden Sitzbank bereitgestellt. Durch das verringerte Risiko für Babys und Kleinkinder kann die Erfindung auch bei Sitzbänken eingesetzt werden, die sich üblicherweise in der zweiten oder dritten Sitzreihe befinden, wo häufig Kinder sitzen.

Gemäß einem weiteren Ausführungsbeispiel der Erfindung ist der Querabschnitt näher an einem Sitzkissenvorderende als an einem Sitzkissenhinterende. Dadurch wird das Sitzkissen in einem vorderen Bereich verhärtet und bildet eine bessere Barriere zum Verhindern von Submarining.

Alternativ dazu kann der Querabschnitt näher an einem Sitzkissenhinterende als an einem Sitzkissenvorderende sein.

Gemäß einem weiteren Ausführungsbeispiel der Erfindung weist der Sitzkissenairbag zwei in einer Sitzkissenlängsrichtung verlaufende längliche Längsabschnitte auf, die in einem gefalteten Zustand so gefaltet sind, dass die Falten ausschließlich an einer Ober- und Unterseite der Längsabschnitte verlaufen.

Gemäß einem weiteren Ausführungsbeispiel der Erfindung weist der Sitzkissenairbag in einem gefalteten Zustand und einem aufgeblasenen Zustand eine sich entlang einer Sitzkissenlängsrichtung verändernde Höhe auf. Insbesondere verändert sich die Höhe dabei linear. Beispielsweise kann sich die Höhe ausgehend von einem Sitzkissenvorderende zu einem Sitzkissenhinterende hin verringern oder vergrößern. Dadurch ist der Sitzkissenairbag an eine Sitzkissenform anpassbar.

Darüber hinaus stellt die vorliegende Erfindung ein Kraftfahrzeug mit solch einem Fahrzeugsitz bereit.

Nachfolgend wird ein bevorzugtes Ausführungsbeispiel der vorliegenden Erfindung unter Bezugnahme auf die beigefügten Zeichnungen beschrieben.

In diesen Zeichnungen ist Folgendes dargestellt:
- Figur 1a: zeigt eine Seitenansicht von einem Fahrzeugsitz mit einem nicht entfalteten Sitzkissenairbag vom Stand der Technik;
- Figur 1b: zeigt eine Draufsicht des Fahrzeugsitzes aus Fig. 1a;
- Figur 2a: zeigt eine Seitenansicht des Fahrzeugsitz vom Stand der Technik, in einem aufgeblasenen Zustand des Sitzkissenairbags;
- Figur 2b: zeigt eine Draufsicht des Fahrzeugsitzes aus Fig. 2a;
- Figur 3: zeigt ein Kraftfahrzeug mit einem Fahrzeugsitz gemäß einem Ausführungsbeispiel der Erfindung;
- Figur 4a: zeigt schematisch eine Seitenansicht von einem Fahrzeugsitz mit einem nicht entfalteten Sitzkissenairbag gemäß dem Ausführungsbeispiel der Erfindung;
- Figur 4b: zeigt schematisch eine Draufsicht des Fahrzeugsitzes aus Fig. 4a;
- Figur 5a: zeigt schematisch eine Seitenansicht des Fahrzeugsitz gemäß dem Ausführungsbeispiel der Erfindung, in einem aufgeblasenen Zustand des Sitzkissenairbags;
- Figur 5b: zeigt schematisch eine Draufsicht des Fahrzeugsitzes aus Fig. 5a;
- Figur 6a: zeigt schematisch einen Querschnitt des Sitzkissenairbags in einem nicht entfalteten Zustand;
- Figur 6b: zeigt schematisch einen Querschnitt des Sitzkissenairbags in einem aufgeblasenen Zustand;
- Figur 7a: zeigt schematisch eine Seitenansicht von einem Fahrzeugsitz mit einem nicht entfalteten Sitzkissenairbag gemäß einem zweiten Ausführungsbeispiel der Erfindung;
- Figur 7b: zeigt schematisch eine Draufsicht des Fahrzeugsitzes aus Fig. 7a;
- Figur 8a: zeigt schematisch eine Seitenansicht des Fahrzeugsitz gemäß dem zweiten Ausführungsbeispiel der Erfindung, in einem aufgeblasenen Zustand des Sitzkissenairbags;
- Figur 8b: zeigt schematisch eine Draufsicht des Fahrzeugsitzes aus Fig. 8a;
- Figur 9a: zeigt schematisch eine Seitenansicht von einem Fahrzeugsitz mit einem nicht entfalteten Sitzkissenairbag gemäß einem dritten Ausführungsbeispiel der Erfindung, und
- Figur 9b: zeigt schematisch eine Seitenansicht des Fahrzeugsitz gemäß dem dritten Ausführungsbeispiel der Erfindung, in einem aufgeblasenen Zustand des Sitzkissenairbags.

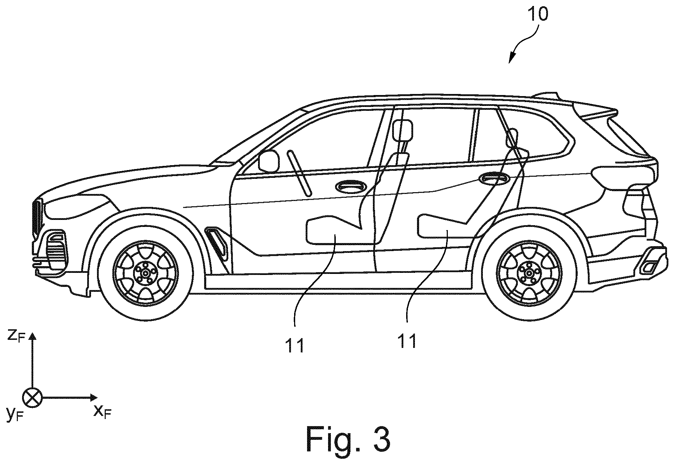

Figur 3 zeigt ein Kraftfahrzeug 10 mit mehreren Fahrzeugsitzen 11 gemäß einem Ausführungsbeispiel der Erfindung. In einer vorderen Sitzreihe sind einzelne Fahrzeugsitze 11 vorgesehen, während in einer oder mehreren hinteren Sitzreihen in Form einer Sitzbank pro Sitzreihe mehrere Fahrzeugsitze 11 vereint sind.

Ein Koordinatensystem markiert in Fig. 3 die Fahrzeuglängsachse x_{F}, die Fahrzeugquerachse y_{F} sowie die Fahrzeughochachse z_{F}, die alle senkrecht zueinander stehen.

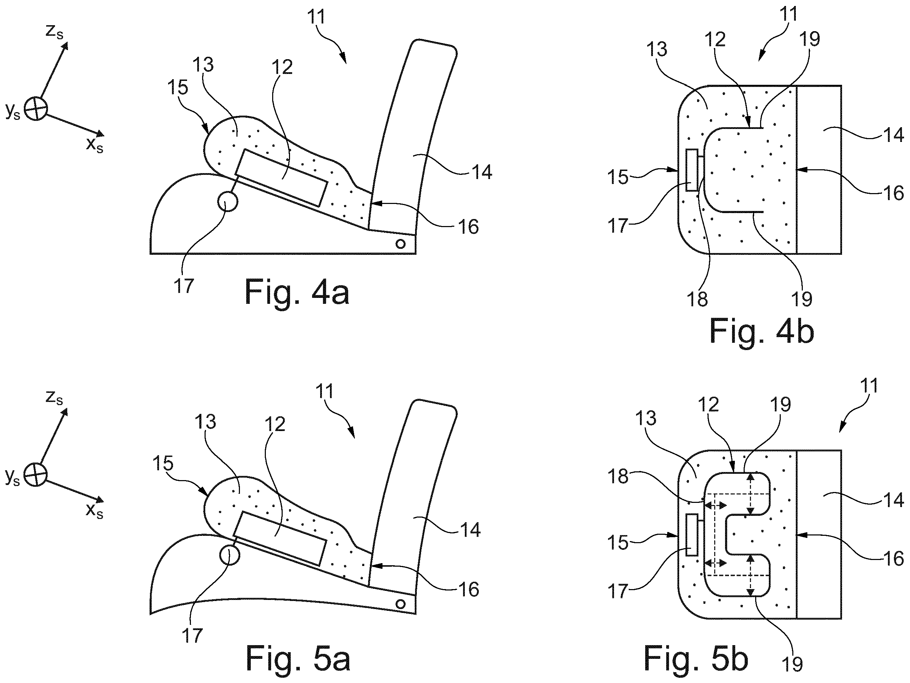

Die Figuren 4a und 4b zeigen eine Seitenansicht sowie eine Draufsicht des Fahrzeugsitzes 11 mit einem nicht entfalteten Sitzkissenairbag 12 bzw. Sitzkissengassack gemäß dem Ausführungsbeispiel der Erfindung. Der Sitzkissenairbag 12 ist in ein Sitzkissen 13 integriert, welches jeweils eine Sitzfläche für Insassen des Kraftfahrzeugs 10 ausbildet. Darüber hinaus weist der Fahrzeugsitz 11 eine Rückenlehne 14 auf, die jeweils einen Rücken der Insassen abstützt.

In Fig. 4a und 4b markiert ein Koordinatensystem eine Sitzkissenlängsachse xs, eine Sitzkissenquerachse ys sowie eine Sitzkissenhochachse zs, die alle senkrecht zueinander stehen. Das Sitzkissen 13 ist gegenüber einer Horizontalen bzw. der Fahrzeuglängsachse x_{F} so geneigt, dass ein Sitzkissenvorderende 15, bezogen auf die Fahrzeughochachse x_{F}, höher liegt als ein Sitzkissenhinterende 16. Das Sitzkissen 13 ist mit einem Schaumstoff bzw. einem elastischen Schaum gefüllt, in den der Sitzkissenairbag 12 eingebettet ist. Insbesondere ist der Sitzkissenairbag 12 an einer Unterseite des Sitzkissens 13 angeordnet. Bei dem Sitzkissenairbag 12 handelt es sich um einen Gassack, der mittels eines pyrotechnischen Generators 17 aufblasbar ist, d.h. von einem gefalteten Zustand in einen entfalteten bzw. aufgeblasenen Zustand bringbar ist.

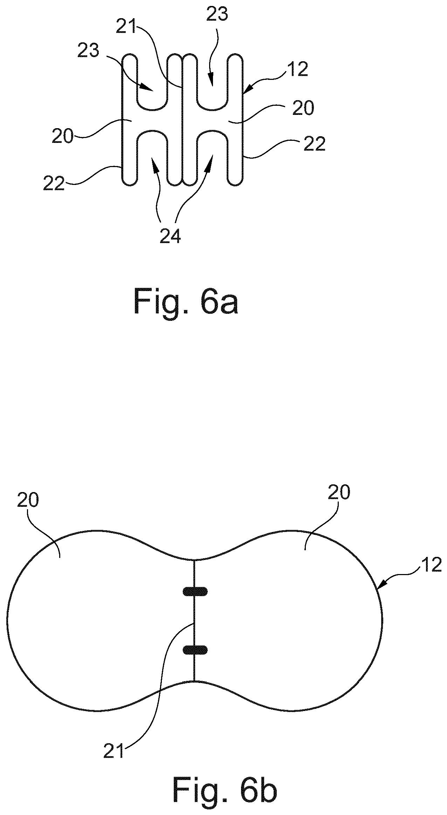

In der Draufsicht 4b ist erkennbar, dass der Sitzkissenairbag 12 im gefalteten Zustand U-förmig ist, mit einem entlang der Sitzquerachse ys verlaufenden Querabschnitt 18, von dem sich zwei Längsabschnitte 19 (entlang der Sitzkissenlängsachse xs) zum Sitzkissenhinterende 16 erstecken. Der Querabschnitt 18 und die Längsabschnitte 19 sind einstückig, insbesondere monolithisch ausgebildet und bilden einen zusammenhängenden, mit einem mittels des Gasgenerators 17 mit Gas befüllbaren Hohlraum 20 (siehe Figs. 6a und 6b).

Figur 6a zeigt einen Querschnitt durch den gefalteten Sitzkissenairbag 12, d.h. einen Querschnitt in einer xs/zs-Ebene des Querabschnitts 18 sowie einen Querschnitt in einer ys/zs-Ebene der Längsabschnitte 19. Wie in Fig. 6a zu erkennen ist, ist das Material des Sitzkissenairbags 12 so gefaltet, dass Faltkanten entlang einem oberen und unteren Ende des Sitzkissenairbags 12, d.h. des Querabschnitts 18 und der Längsabschnitte 19, verlaufen. Genauer werden Abschnitte 23 einer Oberseite des Sitzkissenairbags 12 nach unten eingefaltet, so dass mehrere Faltungen an der Oberseite entstehen, die nach Innen gefaltet sind. Ferner werden Abschnitte 24 einer Unterseite des Sitzkissenairbags 12 nach oben eingefaltet, so dass mehrere Faltungen an der Unterseite entstehen, die nach Innen gefaltet sind. Dadurch sind sämtliche Faltungen ausschließlich an der Ober- und Unterseite des gefalteten Sitzkissenairbags 12 angeordnet. Die Begriffe "oben", "unten", "Oberseite" und "Unterseite" beziehen sich dabei auf die Sitzkissenhochachse zs. Dadurch sind sämtliche Faltungen zwischen ungefalteten Seitenwandungen 20 des Sitzkissenairbags 12 angeordnet. Die Seitenwandungen 20 verlaufen parallel zur Sitzkissenhochachse zs. Anders ausgedrückt wird der Sitzkissenairbag 12 so gefaltet, dass er nur entlang einer Horizontalrichtung, d.h. senkrecht zur Sitzkissenhochachse zs, aufeinander gefaltet wird. Durch diese Faltung wird die spätere Entfaltungsrichtung vorgegeben. Außerdem hat der Sitzkissenairbag 12 durch diese Faltung in einem gefalteten und einem aufgeblasenen Zustand im Wesentlichen eine unveränderte Höhe (entlang der Sitzkissenhochachse zs gesehen), während sich der Sitzkissenairbag 12 im Wesentlichen seitlich bezogen auf die jeweilige Längsrichtung des Airbagabschnitts aufbläst, d.h. der Querabschnitt 18 entfaltet sich entlang der Sitzkissenlängsachse xs zum Sitzkissenvorderende 15 und zum Sitzkissenhinterende 16 hin, wohingegen sich die Längsabschnitte 19 entlang der Sitzkissenquerachse y_{S} zu beiden Seiten des Fahrzeugsitzes 11 hin entfalten.

Die Figuren 5a und 5b zeigen eine Seitenansicht sowie eine Draufsicht des Fahrzeugsitzes 11 mit Sitzkissenairbag 12 gemäß dem Ausführungsbeispiel der Erfindung in seinem entfalteten bzw. aufgeblasenen Zustand (d.h. vollständig entfaltet bzw. vollständig aufgeblasen). Bei einem Unfall des Kraftfahrzeugs 10, insbesondere vor einem Unfall (wenn ein starker Aufprall als unausweichlich detektiert wird), während eines Unfalls oder nach einem Unfall (nachdem der Aufprall stattgefunden hat und durch Crashsensoren detektiert wurde), kann durch Zündung des pyrotechnischen Generators 17 der Sitzkissenairbag 12 aufgeblasen werden. Wie bereits erwähnt, entfaltet sich der Querabschnitt 18 entlang der Sitzkissenlängsachse xs und die Längsabschnitte 19 entlang der Sitzkissenquerachse y_{S}.

Figur 6b zeigt einen Querschnitt durch den aufgeblasenen Sitzkissenairbag 12, d.h. einen Querschnitt in einer xs/zs-Ebene des Querabschnitts 18 sowie einen Querschnitt in einer ys/zs-Ebene der Längsabschnitte 19. Um eine Höhe des Sitzkissenairbags 12 während des Entfaltens zu begrenzen, so dass in einem gefalteten und einem aufgeblasenen Zustand im Wesentlichen eine unveränderte Höhe (entlang der Sitzkissenhochachse zs gesehen) beibehalten wird, sind Verbindungselemente 21 im Inneren des Sitzkissenairbags 12, d.h. im Hohlraum 20, vorgesehen, die eine obere (bezogen auf Sitzkissenhochachse zs) Innenwandung des Sitzkissenairbags 12 mit einer unteren (bezogen auf Sitzkissenhochachse zs) Innenwandung verbinden. Diese Verbindungselemente 21 können Fangbänder (z.B. Bahnen, insbesondere Stoffbahnen), Fangschnüre (z.B. Fäden, insbesondere Stofffäden) und/oder Fangwandungen sein, die einstückig, insbesondere monolithisch, mit dem Wandungsmaterial des Sitzkissenairbags ausgebildet sind oder nachträglich daran befestigt (z.B. geklebt, eingenäht, usw.) werden, insbesondere nicht zerstörungsfrei lösbar befestigt werden.

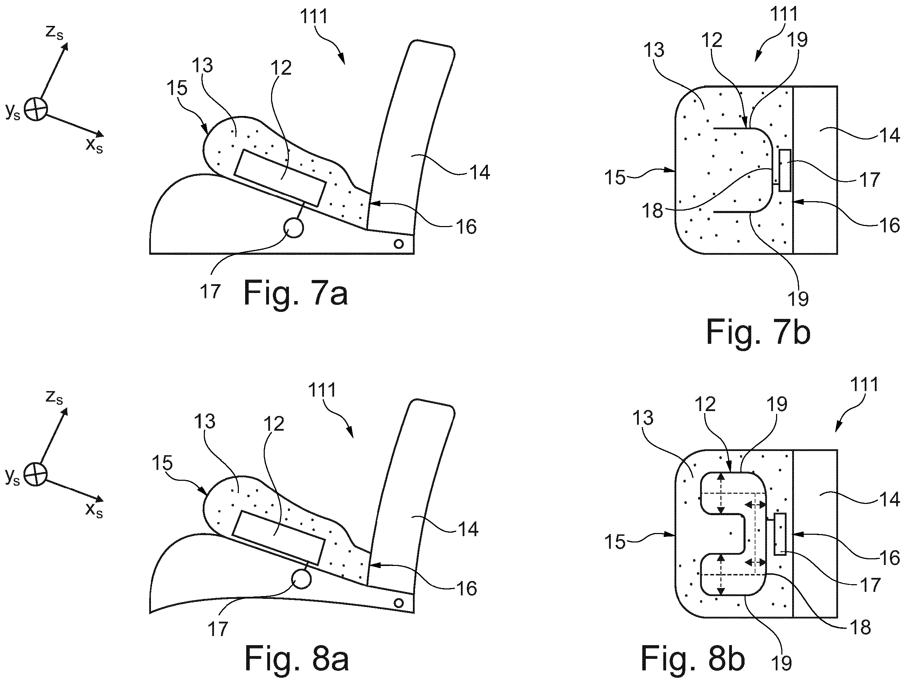

Die Figuren 7a bis 8b zeigen schematisch einen Fahrzeugsitz 111 mit einem Sitzkissenairbag 12 gemäß einem zweiten Ausführungsbeispiel der Erfindung. Dieser Fahrzeugsitz 111 unterscheidet sich von dem Fahrzeugsitz 11 des ersten Ausführungsbeispiels nur dadurch, dass der Sitzkissenairbag 12 inkl. seines Generators 17 um 180° (um die Sitzkissenhochachse zs) gedreht ist, so dass der Querabschnitt 18 näher zum Sitzkissenhinterende 16 als zum Sitzkissenvorderende 15 angeordnet ist. Auf diese Weise erstrecken sich die Längsabschnitte 19 ausgehend vom Querabschnitt 18 hin zum Sitzkissenvorderende 15. Ansonsten wird auf die Beschreibung des ersten Ausführungsbeispiels verwiesen, um Wiederholungen zu vermeiden.

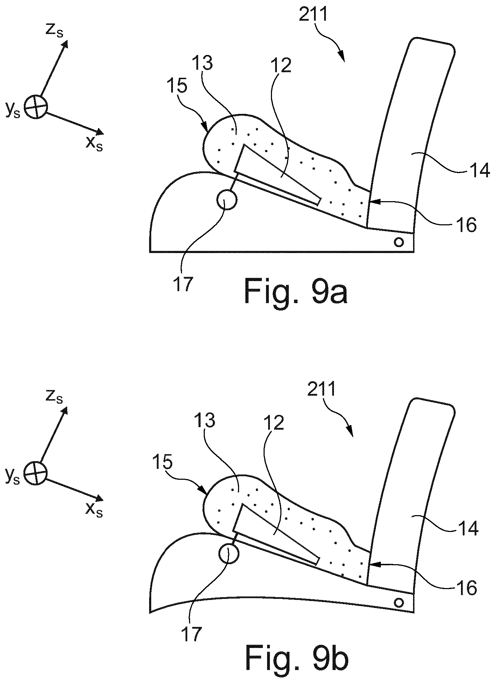

Die Figuren 9a und 9b zeigen schematisch einen Fahrzeugsitz 211 mit einem Sitzkissenairbag 12 gemäß einem dritten Ausführungsbeispiel der Erfindung. Dieses Ausführungsbeispiel unterscheidet sich von den vorhergehenden Ausführungsbeispielen nur dadurch, dass der Sitzkissenairbag 12, sowohl im nicht entfalteten als auch im aufgeblasenen Zustand, eine sich entlang der Sitzkissenlängsachse xs verändernde Höhe (entlang der Sitzkissenhochachse zs) hat. Beispielsweise verändert sich die Höhe dabei linear. Dabei kann sich die Höhe ausgehend vom Sitzkissenvorderende 15 zum Sitzkissenhinterende 16 hin verringern oder vergrößern. Diese sich verändernde Höhe ist sowohl auf das erste als auch zweite Ausführungsbeispiel anwendbar. Dadurch ist der Sitzkissenairbag an eine Sitzkissenform anpassbar.

Während die Erfindung detailliert in den Zeichnungen und der vorangehenden Beschreibung veranschaulicht und beschrieben wurde, ist diese Veranschaulichung und Beschreibung als beispielhaft und nicht als beschränkend zu verstehen und es ist nicht beabsichtigt die Erfindung auf das offenbarte Ausführungsbeispiel zu beschränken.

## Patentansprüche

1. Fahrzeugsitz (11; 111; 211) mit
einem Sitzkissen (13), und
einem in das Sitzkissen (13) integrierten Sitzkissenairbag (12), der bei einem Unfall auslösbar ist,
wobei der Sitzkissenairbag (12) in einem gefalteten Zustand so gefaltet ist, dass Abschnitte (23) einer Oberseite des Sitzkissenairbags (12) nach unten, bezogen auf eine Sitzkissenhochachse (zs), eingefaltet sind und Abschnitte (24) einer Unterseite des Sitzkissenairbags (12) nach oben, bezogen auf die Sitzkissenhochachse (zs), eingefaltet sind, so dass sich der Sitzkissenairbag (12) im Wesentlichen nur in Richtungen senkrecht zur Sitzkissenhochachse (zs) entfaltet.

2. Fahrzeugsitz (11; 111; 211) gemäß Anspruch 1, wobei der Sitzkissenairbag (12) in einem gefalteten Zustand so gefaltet ist, dass die eingefalteten Abschnitte (23, 24) zwischen nicht eingefalteten, parallel zu einer Sitzkissenhochachse (zs) verlaufenden Seitenwandungen (20) des Sitzkissenairbags (12) angeordnet sind.

3. Fahrzeugsitz (11; 111; 211) gemäß Anspruch 1 oder 2, wobei der Sitzkissenairbag (12) einen in einer Sitzkissenquerrichtung (ys) verlaufenden länglichen Querabschnitt (18) aufweist, der in einem gefalteten Zustand so gefaltet ist, dass die Falten entlang der Sitzkissenquerrichtung (y_{S}) verlaufen.

4. Fahrzeugsitz (11; 111; 211) gemäß Anspruch 3, wobei der Sitzkissenairbag (12) U-förmig ist, dergestalt, dass sich vom Querabschnitt (18) ausgehend zwei Längsabschnitte (19) zu einem Sitzkissenvorderende (15) oder einem Sitzkissenhinterende (16) hin erstrecken.

5. Fahrzeugsitz (11; 111; 211) gemäß Anspruch 4, wobei die Längsabschnitte (19) in einem gefalteten Zustand so gefaltet sind, dass die Falten entlang einer Sitzkissenlängsrichtung (xs) verlaufen.

6. Fahrzeugsitz (11; 111; 211) gemäß Anspruch 4 oder 5, wobei der Bereich innerhalb der U-Form frei von unfallabhängig auslösbaren Sitzkissenairbags ist.

7. Fahrzeugsitz (11; 111; 211) gemäß einem der vorhergehenden Ansprüche, wobei innerhalb des Sitzkissenairbags (12) Verbindungselemente (21) vorgesehen sind, die eine Entfaltung des Sitzkissenairbags (12) entlang einer Sitzkissenhochachse (zs) begrenzen.

8. Fahrzeugsitz (11; 111; 211) gemäß Anspruch 7, wobei die Verbindungselemente (21) Fangbänder, Fangschnüre und/oder Fangwandungen sind.

9. Fahrzeugsitz (11; 111; 211) gemäß einem der vorhergehenden Ansprüche, wobei der Fahrzeugsitz (11) in Form einer mehrere Fahrzeugsitze aufweisenden Sitzbank bereitgestellt wird.

10. Fahrzeugsitz (11; 211) gemäß einem der vorhergehenden Ansprüche, wobei der Querabschnitt (18) näher an einem Sitzkissenvorderende (15) als an einem Sitzkissenhinterende (16) ist.

11. Fahrzeugsitz (111) gemäß einem der Ansprüche 1 bis 9, wobei der Querabschnitt (18) näher an einem Sitzkissenhinterende (16) als an einem Sitzkissenvorderende (15) ist.

12. Fahrzeugsitz (11; 111; 211) gemäß Anspruch 1, wobei der Sitzkissenairbag (12) zwei in einer Sitzkissenlängsrichtung (xs) verlaufende längliche Längsabschnitte (19) aufweist, die in einem gefalteten Zustand so gefaltet sind, dass die Falten ausschließlich an einer Ober- und Unterseite der Längsabschnitte (19) verlaufen.

13. Fahrzeugsitz (211) gemäß einem der vorhergehenden Ansprüche, wobei der Sitzkissenairbag (12) in einem gefalteten Zustand und einem aufgeblasenen Zustand eine sich entlang einer Sitzkissenlängsrichtung (xs) verändernde Höhe aufweist.

14. Kraftfahrzeug (10) mit einem Fahrzeugsitz (11) gemäß einem der Ansprüche 1 bis 13.

## Claims

1. Vehicle seat (11; 111; 211) comprising
a seat cushion (13), and
a seat cushion airbag (12) integrated into the seat cushion (13), which can be triggered in the event of an accident,
wherein the seat cushion airbag (12) is folded in a folded state such that sections (23) of an upper side of the seat cushion airbag (12) are folded downwards with respect to a seat cushion vertical axis (z_{S}), and sections (24) of a lower side of the seat cushion airbag (12) are folded upwards with respect to the seat cushion vertical axis (z_{S}), so that the seat cushion airbag (12) unfolds substantially only in directions perpendicular to the seat cushion vertical axis (z_{S}).

2. Vehicle seat (11; 111; 211) according to claim 1, wherein the seat cushion airbag (12) is folded in a folded state such that the folded sections (23, 24) are arranged between non-folded side walls (20) of the seat cushion airbag (12) running parallel to a seat cushion vertical axis (z_{S}).

3. Vehicle seat (11; 111; 211) according to claim 1 or 2, wherein the seat cushion airbag (12) has an elongated transverse section (18) extending in a seat cushion transverse direction (y_{S}), which is folded in a folded state such that the folds run along the seat cushion transverse direction (y_{S}).

4. Vehicle seat (11; 111; 211) according to claim 3, wherein the seat cushion airbag (12) is U-shaped, such that two longitudinal sections (19) extend from the transverse section (18) towards a seat cushion front end (15) or a seat cushion rear end (16).

5. Vehicle seat (11; 111; 211) according to claim 4, wherein the longitudinal sections (19) are folded in a folded state such that the folds run along a seat cushion longitudinal direction (x_{S}).

6. Vehicle seat (11; 111; 211) according to claim 4 or 5, wherein the area within the U-shape is free of accident-dependent triggerable seat cushion airbags.

7. Vehicle seat (11; 111; 211) according to any one of the preceding claims, wherein connecting elements (21) are provided within the seat cushion airbag (12), which limit the unfolding of the seat cushion airbag (12) along a seat cushion vertical axis (z_{S}).

8. Vehicle seat (11; 111; 211) according to claim 7, wherein the connecting elements (21) are tethers, catch cords and/or catch walls.

9. Vehicle seat (11; 111; 211) according to any one of the preceding claims, wherein the vehicle seat (11) is provided in the form of a bench seat comprising several vehicle seats.

10. Vehicle seat (11; 211) according to any one of the preceding claims, wherein the transverse section (18) is closer to a seat cushion front end (15) than to a seat cushion rear end (16).

11. Vehicle seat (111) according to any one of claims 1 to 9, wherein the transverse section (18) is closer to a seat cushion rear end (16) than to a seat cushion front end (15).

12. Vehicle seat (11; 111; 211) according to claim 1, wherein the seat cushion airbag (12) has two elongated longitudinal sections (19) extending in a seat cushion longitudinal direction (x_{S}), which are folded in a folded state such that the folds run exclusively on an upper and lower side of the longitudinal sections (19).

13. Vehicle seat (211) according to any one of the preceding claims, wherein the seat cushion airbag (12) has a height that varies along a seat cushion longitudinal direction (x_{S}) in a folded state and an inflated state.

14. Motor vehicle (10) with a vehicle seat (11) according to any one of claims 1 to 13.

## Revendications

1. Siège de véhicule (11; 111; 211) comprenant
un coussin de siège (13), et
un airbag de coussin de siège (12) intégré dans le coussin de siège (13), pouvant être déclenché en cas d'accident,
dans lequel l'airbag de coussin de siège (12) est plié dans un état plié de telle sorte que des sections (23) d'un côté supérieur de l'airbag de coussin de siège (12) sont repliées vers le bas par rapport à un axe vertical de coussin de siège (z_{S}), et des sections (24) d'un côté inférieur de l'airbag de coussin de siège (12) sont repliées vers le haut par rapport à l'axe vertical de coussin de siège (z_{S}), de sorte que l'airbag de coussin de siège (12) se déploie sensiblement uniquement dans des directions perpendiculaires à l'axe vertical de coussin de siège (z_{S}).

2. Siège de véhicule (11; 111; 211) selon la revendication 1, dans lequel l'airbag de coussin de siège (12) est plié dans un état plié de telle sorte que les sections pliées (23, 24) sont disposées entre des parois latérales non pliées (20) de l'airbag de coussin de siège (12) s'étendant parallèlement à un axe vertical de coussin de siège (z_{S}).

3. Siège de véhicule (11; 111; 211) selon la revendication 1 ou 2, dans lequel l'airbag de coussin de siège (12) comporte une section transversale allongée (18) s'étendant dans une direction transversale de coussin de siège (y_{S}), qui est pliée dans un état plié de telle sorte que les plis s'étendent le long de la direction transversale de coussin de siège (y_{S}).

4. Siège de véhicule (11; 111; 211) selon la revendication 3, dans lequel l'airbag de coussin de siège (12) est en forme de U, de telle sorte que deux sections longitudinales (19) s'étendent à partir de la section transversale (18) vers une extrémité avant de coussin de siège (15) ou une extrémité arrière de coussin de siège (16).

5. Siège de véhicule (11; 111; 211) selon la revendication 4, dans lequel les sections longitudinales (19) sont pliées dans un état plié de telle sorte que les plis s'étendent le long d'une direction longitudinale de coussin de siège (x_{S}).

6. Siège de véhicule (11; 111; 211) selon la revendication 4 ou 5, dans lequel la zone à l'intérieur de la forme en U est exempte d'airbags de coussin de siège déclenchables en fonction d'un accident.

7. Siège de véhicule (11; 111; 211) selon l'une quelconque des revendications précédentes, dans lequel des éléments de liaison (21) sont prévus à l'intérieur de l'airbag de coussin de siège (12), qui limitent le déploiement de l'airbag de coussin de siège (12) le long d'un axe vertical de coussin de siège (z_{S}).

8. Siège de véhicule (11; 111; 211) selon la revendication 7, dans lequel les éléments de liaison (21) sont des sangles de retenue, des cordons de retenue et/ou des parois de retenue.

9. Siège de véhicule (11; 111; 211) selon l'une quelconque des revendications précédentes, dans lequel le siège de véhicule (11) est fourni sous la forme d'une banquette comprenant plusieurs sièges de véhicule.

10. Siège de véhicule (11; 211) selon l'une quelconque des revendications précédentes, dans lequel la section transversale (18) est plus proche d'une extrémité avant de coussin de siège (15) que d'une extrémité arrière de coussin de siège (16).

11. Siège de véhicule (111) selon l'une quelconque des revendications 1 à 9, dans lequel la section transversale (18) est plus proche d'une extrémité arrière de coussin de siège (16) que d'une extrémité avant de coussin de siège (15).

12. Siège de véhicule (11; 111; 211) selon la revendication 1, dans lequel l'airbag de coussin de siège (12) comporte deux sections longitudinales allongées (19) s'étendant dans une direction longitudinale de coussin de siège (x_{S}), qui sont pliées dans un état plié de telle sorte que les plis s'étendent exclusivement sur un côté supérieur et inférieur des sections longitudinales (19).

13. Siège de véhicule (211) selon l'une quelconque des revendications précédentes, dans lequel l'airbag de coussin de siège (12) présente une hauteur qui varie le long d'une direction longitudinale de coussin de siège (x_{S}) dans un état plié et un état gonflé.

14. Véhicule automobile (10) comprenant un siège de véhicule (11) selon l'une quelconque des revendications 1 à 13.
